Europäisches Patentamt

European Patent Office

Office européen des brevets

(19)

(11) **EP 0 482 138 B1**

(12) **EUROPÄISCHE PATENTSCHRIFT**

(45) Veröffentlichungstag und Bekanntmachung des Hinweises auf die Patenterteilung:
**04.09.1996  Patentblatt 1996/36**

(51) Int Cl.$^6$: **H02J 7/00**

(86) Internationale Anmeldenummer:
**PCT/DE91/00287**

(21) Anmeldenummer: 91906722.3

(22) Anmeldetag: **05.04.1991**

(87) Internationale Veröffentlichungsnummer:
**WO 91/17599 (14.11.1991 Gazette 1991/26)**

(54) **ANORDNUNG UND VERFAHREN ZUM LADEN EINES AKKUMULATORS EINER TRANSPORTVORRICHTUNG MIT EIGENEM ELEKTRO-ANTRIEB**

DEVICE AND PROCESS FOR CHARGING THE BATTERY OF A SELF-POWERED ELECTRIC TRANSPORT VEHICLE

INSTALLATION ET PROCEDE POUR LA CHARGE D'UN ACCUMULATEUR D'UN DISPOSITIF DE TRANSPORT A PROPULSION ELECTRIQUE AUTONOME

(84) Benannte Vertragsstaaten:
**CH DE FR GB IT LI**

(30) Priorität: **08.05.1990  DE 4014696**

(43) Veröffentlichungstag der Anmeldung:
**29.04.1992  Patentblatt 1992/18**

(73) Patentinhaber: **ROBERT BOSCH GMBH**
**70442 Stuttgart (DE)**

(72) Erfinder:
- **DREXEL, Peter**
  **D-7049 Steinenbronn (DE)**
- **UTZ, Rainer**
  **D-7050 Waiblingen (DE)**
- **ERNE, Hans**
  **D-7050 Waiblingen (DE)**
- **REITMEIER, Stefan**
  **D-7050 Waiblingen-Hohenacker (DE)**
- **MUELLER, Ulrich**
  **D-7045 Korb (DE)**

(56) Entgegenhaltungen:
| | |
|---|---|
| EP-A- 0 285 527 | DE-A- 3 312 600 |
| DE-A- 3 832 840 | DE-U- 8 808 873 |
| US-A- 4 347 472 | US-A- 4 580 081 |
| US-A- 4 885 523 | |

- **PATENT ABSTRACTS OF JAPAN vol. 8, no. 189 (M-321)(1626) 30 August 1984; & JP-A-59 80 103**

## Beschreibung

### Stand der Technik

Die Erfindung geht aus von einer Anordnung zum Laden eines Akkumulators einer Transportvorrichtung nach der Gattung des Hauptanspruchs. Weiterhin geht die Erfindung aus von einem Verfahren nach der Gattung des nebengeordneten Verfahrensanspruchs.

Nach EP-A 285 527 ist eine Transferstraße bekannt, bei der sich auf einer Führungsbahn Werkstücktransportwagen von einer Bearbeitungsstation zur anderen bewegen. Dabei verfügen die Bearbeitungsstationen über jeweils eine Stoppeinrichtung zum Arretieren des Werkstücktransportwagens. Der Werkstücktransportwagen wird mittels eines Elektro-Antriebes bewegt, der seine Energie aus einem im Werkstücktransportwagen mitgeführten Akkumulator bezieht. Bei der Arretierung des Werkstücktransportwagens in der Bearbeitungsstation werden an der Unterseite des Werkstücktransportwagen angebrachte Ladekontakte, die mit dem Akkumulator elektrisch verbunden sind, mit entsprechenden Ladekontakten der in der Bearbeitungsstation angeordneten Ladestation in Verbindung gebracht. Während der Bearbeitung in der Bearbeitungsstation erfolgt dann das Nachladen des Akkumulators. Dabei sind in der genannten Vorveröffentlichung keine besonderen Mittel angegeben, um den Akkumulator kapazitätsabhängig nachzuladen.

Wie sich herausgestellt hat, besteht bei Transferstraßen mit Akkumulatorversorgung das Problem, daß die Bearbeitungszeiten in den Bearbeitungsstationen nicht immer ausreichen, um die erforderliche Ladung zu erreichen. Deshalb wird häufig die Verweildauer der Werkstücktransportwagen in den Bearbeitungsstationen bestimmt von der Ladezeit, die erforderlich ist, um die notwendige Ladung des Akkumulators zu erreichen. Damit verlängert die Ladezeit unnötig den Bearbeitungsdurchlauf der Werkstücktransportwagen.

Aus der DE 38 32 840 AI ist ein Transportsystem mit batteriebetriebenen Fahrzeugen bekannt, bei dem Ladestellen vorgesehen sind, an denen den Batterien der Fahrzeuge über Kontakte Ladestrom zugeführt wird. Sowohl die Steuerung des Fahrzeugdurchlaufs als auch die Steuerung der Batterieladung erfolgt mit Hilfe eines externen Rechners. Zur Übertragung der Daten des Ladezustandes der Batterie ist jedes Fahrzeug mit einem Datenübertragungs-Sender/-Empfänger ausgerüstet. Die Informationsübertragung des Ladezustandes der Batterie zwischen Fahrzeug und Rechner erfolgt über eine separaten Datenkanal.

Aus der US-A- 4 347 472 ist ferner eine Vorrichtung zum Laden einer Batterie eines batteriebetriebenen Fahrzeugs bekannt, bei der die Leistungsankopplung zwischen einer externen Stromversorgungsvorrichtung und einer im Fahrzeug befindlichen Ladevorrichtung induktiv erfolgt. Über einen im Fahrzeug angeordneten Ah-zähler wird der Ladezustand der Batterie überwacht.

Ein Vergleich des Ladezustandes mit einer Mindestladung ist nicht vorgesehen.

### Vorteile der Erfindung

Die Erfindung mit den kennzeichnenden Merkmalen des unabhängigen Vorrichtungs- und Verfahrensanspruchs hat demgegenüber den Vorteil, daß ein bedarfsgerechtes Nachladen des Akkumulators möglich ist, wobei sich der Bedarf aus einer Energiebilanz ergibt, die die verbrauchte Energie mit mindestenes einem Referenzwert vergleicht.

Mit der Erfindung kann somit erreicht werden, daß der Akkumulator des Werkstücktransportwagens stets eine Mindestladung erhält, die es ihm erlaubt, zur nächsten Ladestation zu gelangen. Damit kann sich die Ladezeit in den Bearbeitungsstationen auf das Erreichen dieser Mindestladung beschränken. Dadurch ist die Verweildauer in den Bearbeitunsgstationen nur in den Fällen von der Ladezeit des Akkumulators abhängig, wenn die Mindestladung noch nicht erreicht ist. Diese Situation wird aber äußerst selten auftreten, da im Bearbeitungsablauf auch solche Bearbeitungszeiten auftreten, die eine Ladezeit über die Mindestladung hinaus garantieren.

Besonders vorteilhaft ist, die mittels der im Werkstücktransportwagen untergebrachten Laderegelung geregelten Ladezustände des Akkumulators der externen Steuereinheit mitzuteilen und zur Informationsübertragung die Leistungsankopplung zwischen Akkumulator und Ladestation zu nutzen. Dies geschieht dadurch, daß für jeden Referenzwert ein Statussignal aufbereitet und der externen Steuerung zugeführt wird.

Um sowohl die Verweildauer in der Bearbeitungsstation nicht unnötig auszudehnen als auch die Akkumualtoren bei längeren Bearbeitungszeiten vor dem Überladen zu schützen, sind als Referenzwerte die Mindestladung $Q_{min}$ und die Maximalladung $Q_{max}$ vorgesehen.

Darüber hinaus lassen sich mit den angegebenen einfachen schaltungstechnischen Mitteln eine Vielzahl von Referenzzuständen übertragen und auswerten.

Durch die in den Unteransprüchen aufgeführten Maßnahmen sind vorteilhafte Weiterbildungen und Verbesserungen der Anordnung und des Verfahrens möglich.

Schaltungstechnisch einfach läßt sich die Impulserkennung realisieren, wenn der Stromfluß anhand eines Spannungsabfalls an einem Fühlerwiderstand detektiert wird. Dabei ist es günstig, wenn das zur Impulserkennung erste Signal ein zum Verlauf des Ladestroms invertiertes Signal ist.

Eine günstige Ausführung besteht weiterhin darin, die Referenzsignale jeweils durch unterschiedliche Puls/Pausenverhätlnisse zu charakterisieren.

Weiterhin gewährleistet die Erfindung, daß ein schonendes Schnellladen des Akkumulators möglich ist. Durch die Laderegelung kann bei hoher Entladung der Ladestrom hoch eingestellt werden, um schnell die Betriebsbereitschaft des Werkstücktransportwagens herzustellen. Andererseits kann bei geringer Entladung der Ladestrom niedrig eingestellt werden, um so eine Überlastung und damit eine Lebensdauerverkürzung des Akkumulators zu vermeiden. Außerdem kann gegen Ende der Aufladung der Ladestrom auf Erhaltungsladung verringert werden, so daß die Ladekapazität des Akkumulators vollständig ausgenutzt werden kann.

Zeichnung

Ein Ausführungsbeispiel der Erfindung ist in der Zeichnung dargestellt und in der nachfolgenden Beschreibung näher erläutert. Es zeigen Fig. 1 eine schematische Darstellung einer erfindungsgemäßen Anordnung im Zusammenwirken mit einem Werkstücktransportwagen in einer Bearbeitungsstation, Fig. 2 ein Blockschaltbild der erfindungsgemäßen Anordnung, Fig. 3 ein Flußdiagramm eines erfindungsgemäßen Verfahrens und Fig. 4 den Verlauf von Signalen bei der Verarbeitung von Referenzwerten.

Beschreibung des Ausführungsbeispiels

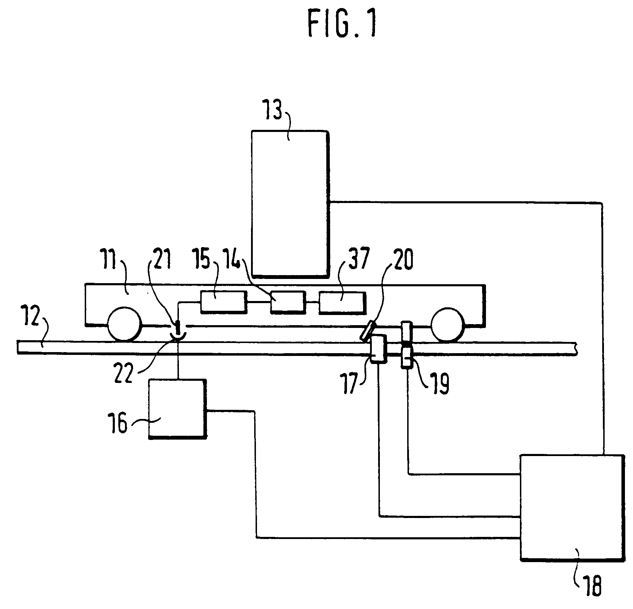

In Fig. 1 befindet sich ein Werkstücktransportwagen 11, der sich auf einer Führungsbahn 12 bewegt, in Positon in einer Bearbeitungsstation 13. Von einer externen Steuerung 18, beispielsweise einer speicherprogrammierbaren Steuerung, erfolgt die Positionsmeldung an den Werkstücktransportwagen 11 mittels eines Positionssensors 19. Die Arretierung in dieser Position erfolgt durch Einrasten einer Anhalteklinke 20 in eine Stoppeinrichtung 17. Der Antrieb des Transportwagens 14 erfolgt mittels eines nicht näher dargestellten Elektro-Antriebes 37, welcher seine Energie aus einem vom Werkstücktransportwagen 11 mitgeführten Akkumulator 14 bezieht. Dem Akkumulator 14 ist eine Regeleinrichtung 15 zugeordnet. Der Bereich der Bearbeitungsstation 13 verfügt weiterhin über eine Ladestation 16. Die Ladestation 16 besitzt Ladekontakte 22, die bei Positionierung des Werkstücktransportwagens 11 in der Bearbeitungsstation 13 mit den Ladekontakten 21 des Werkstücktransportwagens 11 in Verbindung gebracht werden. Über die Ladekontakte 21 und 22 erfolgt die Leistungsankopplung der Ladestation 16 an den Akkumulator 14.

Die Ausführung der Ladekontake 21, 22 erfolgt mit allgemein üblichen Mitteln, wie z.B. Schleifkontakte oder ausfahrbare Kontakte. Eine weitere vorteilhafte Ausführungsform der Ladekontakte 21, 22 wird in der induktiven Kopplung gesehen, die in der Zeichnung nicht weiter ausgeführt ist.Die externe Steuereinheit 18 enthält Steuerleitungen zur Bearbeitungsstation 13, zur Stoppeinrichtung 17, zum Positionssensor 19 und zur Ladestation 16.

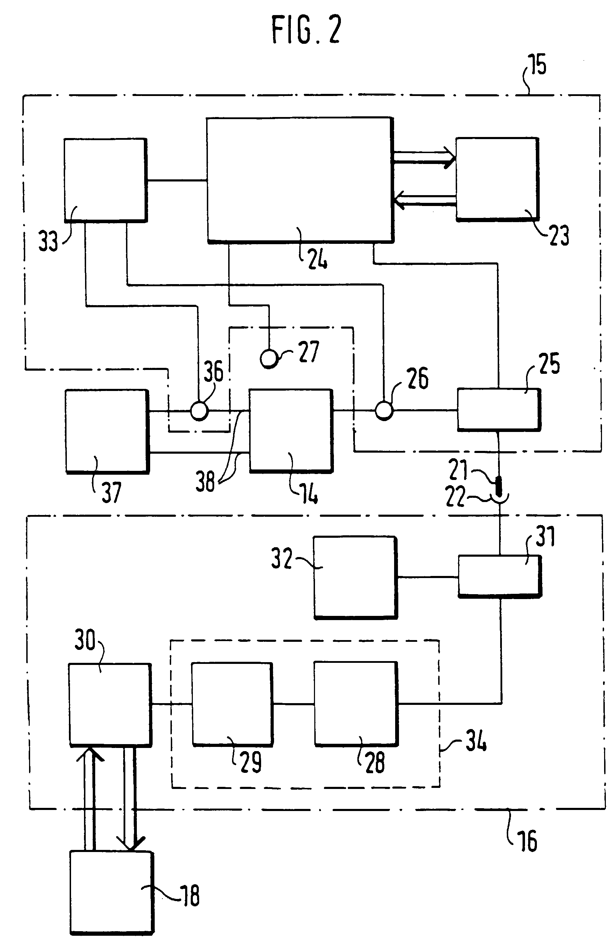

In Fig. 2 ist die im Werkstücktransportwagen 11 untergebrachte Laderegelung 15 mit dem zu ladenden Akkumulator 14, der über die Stromversorgungsleitung 38 den Elektro-Antrieb 37 speist, sowie die im Bereich der Bearbeitungsstation 13 untergebrachte Ladestation 16, die mit der externen Steuerung kommuniziert, dargestellt.

Die Laderegelung 15 umfaßt einen Prozessor 24, der mit mindestens einer Speichereinheit 23, einer Einrichtung zur Erfassung des Ist-Ladezustands 33 und einer Einrichtung zur Beeinflussung des Ladevorganges 25 in Verbindung steht.

Die Einrichtung zur Erfassung des Ist-Ladezustands 33, beispielsweise eine Realzeiterfassunganordnung, summiert den über die Zeit entnommenen Strom und zugeführten Ladestrom auf und ermittelt somit eine Engergiebilanz. Bei Konstantströmen ist es ausreichend, jeweils die Zeit zu ermitteln, in der der Strom fließt. Dazu ist in den Stromversorgungsleitungen 38 zwischen Akkumulator 14 und Elektro-Antrieb 37 ein erster Stromdetektor 36 und in die Versorgungsleitung zwischen der Leistungsankopplung und dem Akkumulator 14 ein zweiter Stromdetektor eingekoppelt, die jeweils lediglich den Stromfluß detektieren.

Aus der Energiebilanz läßt sich die Ladezeit nach der Formel

$$T_l = \frac{I_c \cdot E}{I_l \cdot \eta}$$

ermitteln, wobei

$T_l$    die Ladezeit,
$I_c$    der entnommene Strom,
$I_l$    der Ladestrom,
$E$    die Entladezeit und
$\eta$    der Wirkungsgrad des verwendeten Akkumulators

ist.

Wird mit einer variablen Ladestromstärke geladen und ist der Stromverbrauch des Elektro-Antriebs 37 unterschiedlich, werden an Stelle der beiden Stromdetektoren 36, 37 jeweils Stromfühler eingesetzt. Der Prozessor ermittelt dann anhand der beiden Summen den Ist-Ladezustand.

Es ist aber genauso denkbar, den Ist-Ladezustand mittels Messung der momentanen Akkuspannung zu ermitteln.

Außerdem kann eine Temperaturüberwachungsanordnung 27 vorgesehen werden, die als Sicherheitsvorkehrung den Akkumulator 14 vor einem Überladen zusätzlich schützen soll.

Die Speichereinheit 23 beispielsweise, ein überschreibbarer Speicher, verfügt im vorliegenden Ausführungsbeispiel über drei Speicherplätze. In einem Speicherplatz wird der ermittelte Ist-Ladezustand abgelegt. Die beiden weiteren Speicherplätze dienen zur Aufnahme der Referenzwerte für den Ladezustand des Akkumulators.

Im vorliegenden Ausführungsbeispiel sind als Referenzwerte eine Mindestladung $Q_{min}$ und/oder eine

Maximal ladung $Q_{max}$ vorgesehen, wobei $Q_{min}$ die Ladung ist, die notwendig ist, damit der Werkstücktransportwagen 11 sich bis zur nächsten Bearbeitungsstation bewegen kann, sowie $Q_{max}$ die Ladung ist, die den Vollladezustand des Akkumulators repräsentiert. Mit der Anzeige des Volladezustandes soll ein Überladen des Akkumulators und damit seine frühzeitige Zerstörung vermieden werden.

Die Ladestation enthält ein Ladegerät 32, einen elektronischen Schalter 31, eine Signalverarbeitungsanordnung 34 und eine Signalanpassungsanordnung 30 zur Kommunikation mit der externen Steuerung 18.

Der elektronische Schalter 31 dient dazu, daß der Ladestrom nur zugeschaltet und abgeschaltet wird, wenn sich der Werkstücktransportwagen 11 in Position in der Bearbeitungsstation 13 und die Ladekontakte 21, 22 in Leistungsankopplung befinden.

Die Signalverarbeitungsanordnung 34 enthält eine Impulserkenungsanordnung 28, die über den elektronischen Schalter 31 mit der Leistungsankopplung in Verbindung steht, und eine Signalaufbereitungsanordnung 29, die die über die Leistungsankopplung übertragenen und von der Impulsauswerteanordnung 28 umgesetzten Signale in Status signale umwandelt und der Signalanpassungsanordnung 30 zuführt.

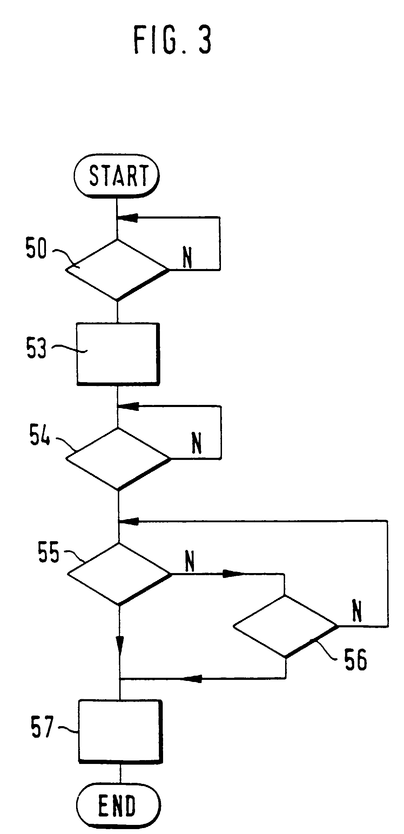

In Fig. 3 ist zum besseren Verständnis der Wirkungsweise der Erfindung ein Flußdiagramm des Verfahrens zum Laden des Akkumulators 14 dargestellt. Zunächst wird im Schritt 50 mittels des Positionssensor 19 festgestellt, ob sich der Werkstücktransportwagen 11 in Position in der Bearbeitungsstation 13 befindet. Ist die Position erreicht und die Halteklinke 20 des Werkstücktransportwagens 11 in der Stoppeinrichtung 17 der Bearbeitungsstation 13 arretiert, wird die Leistungsankopplung über die Ladekontakte 21, 22 realisiert. Liegt die Leistungsankopplung vor, wird von der externen Steuerung 18 eine Startsignal 40 ausgegeben. Mit diesem Startsignal 40 wird gleichzeitig der Ladevorgang durch Betätigung des elektronischen Schalters 31 in Gang gesetzt.

Der Schritt 54 wird vom Prozessor 24 realisiert. Dabei vergleicht der Prozessor 24 den Ist-Ladezustand mit der Mindestladung $Q_{min}$, die in der Speichereinheit 23 abgelegt ist. Hat der Ist-Ladezustand den Wert von $Q_{min}$ erreicht, erfolgt im Schritt 55 von der externen Steuereinheit 18 die Auswertung des Ist-Ladezustandes $Q_{min}$ mit dem Bearbeitungsstatus in der Bearbeitungsstation 13. Ist das Bearbeitungsende noch nicht erreicht, wird vom Prozessor 24 der Ist-Ladezustand des Akkumulators 14 mit der Maximalladung $Q_{max}$ verglichen. Für den Fall, daß das Bearbeitungsende bereits erreicht ist, wird die Verweildauer in der Ladestation nicht durch das Ausdehnen des Ladevorganges bis zum Erreichen von $Q_{max}$ ausgedehnt. In den Fällen Bearbeitungsende erreicht und/oder $Q_{max}$ erreicht, wird im Schritt 57 von der externen Steuerung 18 das Startsignal 40 zurückgenommen. Daraufhin werden die Statussignale in ihren Ausgangszustand zurückgesetzt. Der Ladestrom wird durch Betätigung des elektronischen Schalters 31 gesperrt. Mit dem Trennen der Leistungsankopplung der Ladekontakte 21, 22 liegt der externen Steuereinheit 18 die Quittung vor, daß der Werkstücktransportwagen 11 die Bearbeitungsstation 13 verlassen kann.

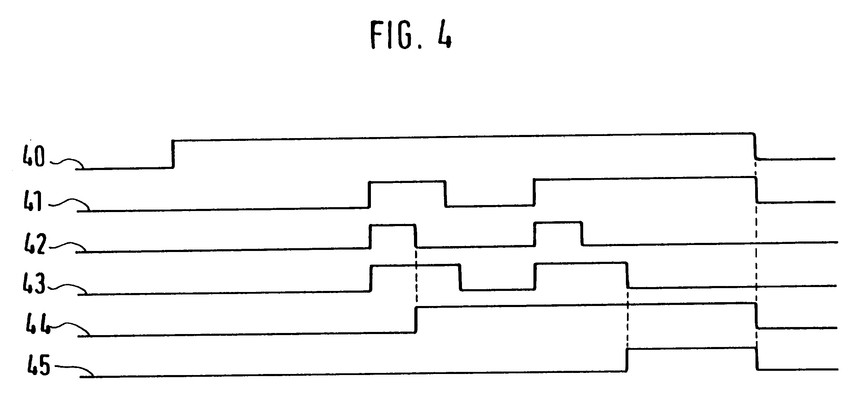

Mit Fig. 4 sei nachfolgend der Signalverlauf verdeutlicht. Wie bereits erläutert, wird bei Positionierung des Werkstücktransportwagens 11 in der Bearbeitungsstation 13 ein Startsignal 40 getriggert. Über die Ladekontakte 21, 22 fließt der Ladestrom zum Akkumulator 14.

Sobald der Ist-Ladezustand den Wert der Mindestladung $Q_{min}$ erreicht hat, wird vom Prozessor 24 die Einrichtung zur Beeinflussung des Ladevorganges 25 betätigt, welche im vorliegenden Ausführungsbeispiel den Ladestrom auf beispielsweise 100 mA reduziert. Es ist aber auch denkbar, den Ladestrom ganz abzuschalten. Beim Erreichen von $Q_{min}$ wird der Ladestrom nur kurzzeitig, im vorliegenden Ausführungsbeispiel beispielsweise 10 ms reduziert. Erreicht der Ladevorgang $Q_{max}$ wird der Ladestrom für die gesamte verbleibende Ladezeit auf beispielsweise 100 mA reduziert. Damit erfolgt gleichzeitig eine Erhaltungsladung, die nicht zum Überladen des Akkumulators führt.

Die Begrenzung des Ladestromes wird von der Impulserkennungsanordnung 28 registriert und dazu ein Signal $I_{aus}$ 41 geschaltet. Das Signal $I_{aus}$ 41 ist beispielsweise ein binäres Signal mit den Zuständen L-0 und hat einen zum Ladestrom invertierten Vorlauf.

Zu jeder 0-L-Flanke des Signals $I_{aus}$ 41 wird von der Signalauswerteanordnung 29 für jeden gespeicherten Referenzwert jeweils ein Referenzsignal geschaltet. Es handelt sich dabei ebenfalls um binäre Signale mit L-O-Verlauf. Im vorliegenden Ausführungsbeispiel werden zu den Referenzwerten $Q_{min}$ und $Q_{max}$ bei Triggerung jeder 0-L-Flanke des Signals 1 aus 41 ein entsprechendes Referenzsignal $S_{min}$ 42 und $S_{max}$ 43 definiert. Die Zeiten der beiden Referenzsignale $S_{min}$ und $S_{max}$ sind unterschiedlich und sind fest eingestellt. Sie betragen hierbei für $S_{min}$ beispielsweise 7 ms und für $S_{max}$ beispielsweise 15 ms.

Die Signalauswerteanordnung 29 hat weiterhin die Aufgabe, aus den den Referenzwerten zugeordneten Referenzsignalen die jeweiligen Statussignale zu bilden, um daraus den Rückschluß auf den tatsächlichen Ladezustand zu ziehen. Dazu erfolgt in der Signalaufbereitungsanordnung 29 die Verarbeitung der Signale $I_{aus}$, $S_{min}$ und $S_{max}$ nach folgenden logischen UND-Verknüpfungen:

$$I_{aus} \wedge \overline{S_{min}}$$

$$I_{aus} \wedge \overline{S_{max}}$$

Anhand dieser logischen Verknüpfungen wird von der Signalauswerteanordnung 29 für jeden Referenzwert ein binäres Statussignal gesetzt. Im vorliegenden Ausführungsbeispiel sind das für die Referenzwerte $Q_{min}$ und $Q_{max}$ die Statussignale MIN 44 und. MAX 45.

Die beiden geschalteten Statussignale MIN und MAX bleiben gespeichert bis die externe Steuerung 18 das Startsignal neu setzt.

Die von der Signalauswerteanordnung 29 geschalteten Statussignale MIN und MAX werden über die Signalanpassungsanordnung 30 der externen Steuerung 18 zugeführt. Dort werden sie als die den zu verarbeitenden Referenzwerten $Q_{min}$ und $Q_{max}$ zugeordneten Signale in die Prozeßsteuerung einbezogen. Die Signalanpassungsanordnung 30 dient als galvanische Trennung der Ladestation 16 zur externen Steuerung 18 und ist beispielsweise mittels in der Zeichnung nicht dargestellten Optokopplern realisiert.

## Patentansprüche

1. Anordnung zum Laden eines Akkumulators (14) einer Transportvorrichtung (11) mit eigenem Elektro-Antrieb, insbesondere in einem selbstfahrenden Werkstücktransportwagen bei Transferstraßen, mit einer externen Steuereinheit (18), einer externen Ladestation (16) und einer Laderegelung (15) mit einem Prozessor (24), bei der sich die Transportvorrichtung (11) von der externen Steuereinheit (18) gesteuert von einer Station zur anderen bewegt und für den Akkumulator (14) eine Leistungsankopplung (21, 22) an die externe Ladestation (16) vorgesehen ist, wobei die Laderegelung (15) in der Transportvorrichtung (11) vorgesehen ist und der Prozessor (24), mit mindestens einer Referenzwerte enthaltenden Speichereinheit (23), einer Einrichtung zur Erfassung des Ist-Ladezustandes (33) und einer Einrichtung (25) zur Beeinflussung des Ladevorgangs verbunden ist, und wobei der Prozessor (24) den Ist-Ladezustand mit einer Mindestladung $Q_{min}$ und einer Maximalladung $Q_{max}$ als Referenzwerten vergleicht und die Einrichtung (25) zur Beeinflussung des Ladevorgangs auf den Ladestrom derart einzuwirken vermag, daß der Akkumulator (14) wenigstens die Mindestladung $Q_{min}$ erhält, dadurch gekennzeichnet, daß die Ladestation (16) eine Signalverarbeitungsanordnung (34) mit einer mit der Leistungsankopplung (21, 22) in Verbindung stehenden Impulserkennungsanordnung (28) aufweist, daß die Impulserkennungsanordnung (28) die von der Einrichtung (25) zur Beeinflussung des Ladevorgangs ausgeübte Einwirkung auf den Ladevorgang erfaßt und bei Beeinflussung des Ladevorgangs für die Mindestladung $Q_{min}$ und für die Maximalladung $Q_{max}$ jeweils ein Signal (41) triggert, daß die Signalverarbeitungsanordnung (34) Mittel (29,30) enthält, die zu jeder Signaltriggerung der Impulserkennungsanordnung (28) für die Mindestladung Qmin ein erstes Referenzsignal (42) und für die Maximimalladung $Q_{max}$ ein zweites Referenzsignal (43) schaltet, und daß mittels einer Verknüpfung des Signals (41) mit dem jeweiligen Referenzsignal (42, 43) ein erstes Statussignal (44) für die Mindestladung $Q_{min}$ und ein zweites Statussignal (45) für die Maximalladung $Q_{max}$ bildet, welche an die externe Steuereinheit (18) übertragen werden.

2. Anordnung nach Anspruch 1, dadurch gekennzeichnet, daß das erste Statussignal (44) durch die logische UND-Verknüpfung $I_{aus} \wedge \overline{S_{min}}$ und daß das zweite Statussignal (45) durch die logische UND-Verknüpfung $I_{aus} \wedge \overline{S_{max}}$ gebildet wird.

3. Anordnung nach Anspruch 1, dadurch gekennzeichnet, daß die Einrichtung (25) zur Beeinflussung des Ladevorganges ein Ladestromregler ist, der den Ladestrom begrenzt oder abschaltet.

4. Anordnung nach Anspruch 1, dadurch gekennzeichnet, daß das erste Signal (41) ein zum Verlauf des Ladestromes invertiertes Signal $I_{aus}$ ist.

5. Anordnung nach Anspruch 1, dadurch gekennzeichnet, daß die Referenzsignale (43, 44) jeweils durch unterschiedliche Puls/Pausenverhältnisse charakterisiert sind.

6. Anordnung nach Anspruch 5, dadurch gekennzeichnet, daß zur Definierung der Puls/Pausenverhältnisse Flip-Flops eingesetzt sind.

7. Anordnung nach Anspruch 1, dadurch gekennzeichnet, daß zur Ankopplung an die externe Steuereinheit (18) eine Signalanpassungsanordnung (30) vorgesehen ist.

8. Anordnung nach Anspruch 6, dadurch gekennzeichnet, daß als Signalanpassungsanordnung (30) eine galvanische Trennung, vorzugsweise eine Übertragung mittels Optokoppler vorgesehen ist.

9. Anordnung nach Anspruch 1 dadurch gekennzeichnet, daß die mindestens eine Speichereinheit (23) ein überschreibbarer Speicher ist.

10. Anordnung nach Anspruch 9, dadurch gekennzeichnet, daß in der Speichereinheit (23) die Ist-Ladezustände abgelegt sind.

11. Anordnung nach Anspruch 1, dadurch gekennzeichnet, daß die Einrichtung zur Erfassung des Ist-Ladezustandes (33) eine Realzeiterfassungsanordnung ist, die über einen zwischen Akkumulator (14) und Elektro-Antrieb (37) angeordneten ersten Stromdetektor (36) den über die Zeit entnommenen Strom und über einen zwischen Akkumulator (14) und Ladekontakte (21) angeordneten zweiten Stromdetektor (26) den über die Zeit zugeführten Ladestrom aufsummiert und daraus den Ist-Zustand bildet.

**12.** Anordnung nach Anspruch 11, dadurch gekennzeichnet, daß der erste und der zweite Stromdetektor (36) und (26) jeweils Stromfühler sind.

**13.** Verfahren zum Laden eines Akkumulators (14) einer Transportvorrichtung (11) mit eigenem Elektro-Antrieb, insbesondere für Werkstücktrasportwagen bei Transferstraßen, bei der sich die Transportvorrichtung (11) von einer externen Steuereinheit (18) gesteuert von einer Station zur anderen bewegt und der Akkumulator (14) über eine Leistungsankopplung (21, 22) von einer externen Ladestation (16) geladen wird, wobei von einem Prozessor (24) in der Transportvorrichtung (11) ein Vergleich des Ist-Ladezustandes mit einer Mindestladung $Q_{min}$ und einer Maximalladung $Q_{max}$ als Referenzwerten durchgeführt wird und anhand dieses Ergebnisses vom Prozessor (24) auf den Ladevorgang derart eingewirkt wird, daß der Akkumulator (14) wenigstens eine einem der Referenzwerte entsprechende Ladung insbesondere die zur Erreichung der nächsten Ladestation notwendige Mindestladung $Q_{min}$ oder höchstens die vorgegebene Maximalladung $Q_{max}$, erhält, dadurch gekennzeichnet, daß die Einwirkung auf den Ladevorgang über die Leistungsankopplung (21, 22) erfaßt wird, daß für die Mindestladung $Q_{min}$ und der Maximalladung $Q_{max}$ von der Ladestation (16) je ein entsprechendes Statussignal (44, 45) gebildet wird, daß die Statussignale (44, 45) der externen Steuereinheit (18) zugeführt werden, daß die Steuereinheit (18) den mittels des Statussignals (44, 45) mitgeteilten Ladezustand des Akkumulators (14) sowie ein den Bearbeitungsstatus repräsentierendes Startsignal (40) auswertet, und daß in Abhängigkeit vom Bearbeitungsende und frühestens mit Erreichen des Mindestladungszustandes die Transportvorrichtung (11) freigegeben wird.

**14.** Verfahren nach Anspruch 13, dadurch gekennzeichnet, daß zur Beeinflussung der Leistungsankopplung der über die Leistungsankopplung fließende Strom verwendet wird, wobei dieser Strom begrenzt oder abgeschaltet wird.

**15.** Verfahren nach Anspruch 13, dadurch gekennzeichnet, daß der Ist-Ladezustand über eine Energiebilanz ermittelt wird, die den über die Zeit entnommenen Strom aufsummiert und danach die Ladezeit nach der Formel

$$T_l = \frac{I_c \cdot E}{I_l \cdot \eta}$$

ermittelt wird, wobei

$T_l$    die Ladezeit,
$I_c$    der entnommene Strom,
$I_l$    der Ladestrom,

E    die Entladezeit und
$\eta$    der Wirkungsgrad des Akkumulators ist.

**16.** Verfahren nach Anspruch 13, dadurch gekennzeichnet, daß bei jeder Beeinflussung der Leistungsankopplung ein Signal (41) getriggert wird, welches zum Ladestrom invertiert verläuft, daß bei jeder Triggerung des ersten Signals (41) für jeden Referenzwert jeweils ein Referenzsignal geschaltet wird, und daß mittels einer Verknüpfung des ersten Signals (41) mit jeweils einem Referenzsignal die den jeweiligen Referenzsignalen zugeordneten Statussignale gebildet werden.

**17.** Anordnung nach Anspruch 13, dadurch gekennzeichnet, daß der Mindestladung $Q_{min}$ und/oder der Maximalladung $Q_{max}$ die Referenzsignale $S_{min}$ (43) und $S_{max}$ (44) zugeordnet werden.

**18.** Verfahren nach Anspruch 13, dadurch gekennzeichnet, daß zur Bildung der Statussignale eine logische UND-Verknüpfung des ersten Signals (41) mit den negierten Referenzsignalen $S_{min}$ (43) und $S_{max}$ (44) verwendet wird.

**19.** Verfahren nach Anspruch 18, dadurch gekennzeichnet, daß die Referenzsignale $S_{min}$ (43) und/oder $S_{max}$ (44) jeweils durch unterschiedliche Puls/Pausenverhältnisse charakterisiert werden.

**Claims**

**1.** Arrangement for charging a battery (14) of a transport device (11) with a dedicated electric drive, in particular in a self-propelled workpiece transport vehicle given the presence of transfer pathways, having an external control unit (18), an external charging station (16) and a charging control system (15) with a processer (24), in which arrangement the transport device (11) is moved, controlled by the external control unit (18), from one station to the other, and a power coupling (21, 22) to the external charging station (16) is provided for the battery (14), the charging control system (15) being provided in the transport device (11), and the processor (24) being connected to at least one memory unit (23) containing reference values, one device for detecting the actual charging state (33) and one device (25) for influencing the charging operation, and the processor (24) comparing the actual charging state with a minimum charge $Q_{min}$ and a maximum charge $Q_{max}$ as reference values, and the device (25) for influencing the charging operation being capable of acting on the charging current in such a way that the battery (14) acquires at least the minimum charge $Q_{min}$, characterized in that the charging station (16) has a signal processing arrangement (34) with a pulse recognition arrangement (28) connected to the power coupling (21, 22), in that the pulse recognition arrangement (28) detects the action, exerted by the device (25) for influencing the charging operation, on the charging operation and respectively triggers a signal (41) when an influence is exerted on the charging operation for the minimum charge $Q_{min}$ and for the maximum charge $Q_{max}$, in that the signal processing arrangement (34) contains means (29, 30) which in relation to each signal triggering of the pulse recognition arrangement (28) switches a first reference signal (42) for the minimum charge $Q_{min}$ and a second reference signal (43) for the maximum charge $Q_{max}$, and in that by means of a combination of the signal (41) with the respective reference signal (42, 43) a first status signal (44) is formed for the minimum charge $Q_{min}$ and a second status signal (45) is formed for the maximum charge $Q_{max}$, which are transmitted to the external control unit (18).

2. Arrangement according to Claim 1, characterized in that the first status signal (44) is formed by the logic AND combination $I_{out} \wedge \overline{S_{min}}$, and in that the second status symbol (45) is formed by the logic AND combination $I_{out} \wedge \overline{S_{min}}$.

3. Arrangement according to Claim 1, characterized in that the device (25) for influencing the charging operation is a charging current controller which limits or switches off the charging current.

4. Arrangement according to Claim 1, characterized in that the first signal (41) is a signal $I_{out}$ which is inverted relative to the characteristic of the charging current.

5. Arrangement according to Claim 1, characterized in that the reference signals (43, 44) are respectively characterized by different mark-to-space ratios.

6. Arrangement according to Claim 5, characterized in that flip-flops are used to define the mark-to-space ratios.

7. Arrangement according to Claim 1, characterized in that a signal-matching arrangement (30) is provided for coupling to the external control unit (18).

8. Arrangement according to Claim 6, characterized in that as a signal-matching arrangement (30) an electrical isolation, preferably a transmission by means of optocouplers, is provided.

9. Arrangement according to Claim 1, characterized in that the at least one memory unit (23) is an overwritable memory.

10. Arrangement according to Claim 9, characterized in that the actual charging states are stored in the memory unit (23).

11. Arrangement according to Claim 1, characterized in that the device for detecting the actual charging state (33) is a real-time detecting arrangement which sums up the current drawn over time via a first current detector (36), arranged between the battery (14) and the electric drive (37), and sums up the charging current fed over time via a second current detector (36), arranged between the battery (14) and charging contacts (21), and forms the actual state therefrom.

12. Arrangement according to Claim 11, characterized in that the first and the second current detectors (36) and (26) are current sensors in each case.

13. Method for charging a battery (14) of a transport device (11) with a dedicated electric drive, in particular for workpiece transport vehicles given the presence of transfer pathways, in which the transport device (11) is moved, controlled by an external control unit (18), from one station to the other, and the battery (14) is charged via a power coupling (21, 22) by an external charging station (16), it being the case that a processor (24) in the transport device (11) carries out a comparison of the actual charging state with a minimum charge $Q_{min}$ and a maximum charge $Q_{max}$ as reference values and this result is used by the processor (24) to act on the charging operation in such a way that the battery (14) acquires at least one charge corresponding to one of the reference values, in particular the minimum charge $Q_{min}$ required to reach the next charging station, or at most the prescribed maximum charge $Q_{max}$, characterized in that the effect on the charging operation is detected via the power coupling (21, 22), in that the charging station (16) respectively forms a corresponding status signal (44, 45) for the minimum charge $Q_{min}$ and the maximum charge $Q_{max}$, in that the status signals (44, 45) are fed to the external control unit (18), in that the control unit (18) evaluates the charging state of the battery (14) communicated by the status signal (44, 45) and evaluates a start signal (40) representing the processing status, and in that the transport device (11) is released as a function of the end of processing and at the earliest when the minimum charging state is reached.

14. Method according to Claim 13, characterized in that to influence the power coupling use is made of the current flowing via the power coupling, this current being limited or switched off.

15. Method according to Claim 13, characterized in that the actual charging state is determined via an energy balance which sums up the current drawn over time and thereafter the charging time is determined according to the formula

$$T_1 = \frac{I_c \cdot E}{I_l \cdot \eta}$$

it being the case that

$T_l$    is the charging time,
$I_c$    is the current drawn,
$I_l$    is the charging current,
$E$    is the discharging time, and
$\eta$    is the efficiency of the battery.

16. Method according to Claim 13, characterized in that on each occasion that the power coupling is influenced a signal (41) is triggered which is inverted relative to the charging current, in that for each triggering of the first signal (41) a reference signal is respectively connected for each reference value, and in that the status signals assigned to the respective reference signals are formed by combining the first signal (41) with one reference signal in each case.

17. Method according to Claim 13, characterized in that the reference signals $S_{min}$ (43) and $S_{max}$ (44) are assigned to the minimum charge $Q_{min}$ and/or the maximum charge $Q_{max}$.

18. Method according to Claim 13, characterized in that a logic AND combination of the first signal (41) with the negated reference signals $S_{min}$ (43) and $S_{max}$ (44) is used to form the status signals.

19. Method according to Claim 18, characterized in that the reference signals $S_{min}$ (43) and/or $S_{max}$ (44) are respectively characterized by different mark-to-space ratios.

**Revendications**

1. Installation servant à charger un accumulateur (14) d'un dispositif de transport (11) avec son propre moyen électrique d'entraînement en particulier dans un chariot ou véhicule de transport de pièces à usiner automoteur dans le cas de voies de transfert avec une unité de commande (18), un poste de charge externe (16) et une régulation de la charge (15) avec un processeur (24), installation dans le cas de laquelle le dispositif de transport (11) se déplace d'un poste à l'autre en étant commandé par l'intermédiaire de commande (18) et où il est prévu pour l'accumulateur (14) un couplage de puissance (21, 22) avec le poste externe de charge (16), la régulation de la charge (15) étant prévue dans le dispositif de transport (11) et le processeur (24) étant relié avec au moins une unité de mémoire (23) contenant des valeurs de référence, un système pour détecter l'état de charge réelle (33) et un système (25) pour influencer le processus de charge et le processeur (24) comparant l'état de charge réel à une charge minimale $Q_{min}$ et d'une charge maximale $Q_{max}$ en tant que valeurs de référence et le système (25), qui sert à influencer le processus de charge pouvant agir sur le courant de charge d'une façon telle que l'accumulateur (14) contienne au moins la charge minimale $Q_{min}$,

installation caractérisée en ce que
le poste de charge (16) présente une installation de retraitement de signaux (34) avec une installation de détection d'impulsions (28) qui est en liaison avec le couplage de puissance (21, 22),
en ce que
l'installation de détection d'impulsions (28) détecte l'action exercée sur le processus de charge par le dispositif (25) servant à influencer le processus de charge et lorsque le processus de charge est influencé déclenche pour la charge minimale $Q_{min}$ et pour la charge maximale $Q_{max}$ respectivement un signal (41),
en ce que
l'installation de retraitement des signaux (34) contient des moyens (29, 30) qui à chaque déclenchement d'un signal par le dispositif de détection des impulsions (28) branché pour la charge minimale $Q_{min}$ un premier signal de référence (42) et pour la charge maximale $Q_{max}$ un second signal de référence (43) et en ce qu'au moyen d'une combinaison du signal (41) avec le signal de référence correspondant (42, 43) forme un premier signal d'état (44) pour la charge minimale $Q_{min}$ et un second signal d'état (45) pour la charge maximale $Q_{max}$, qui sont transmis à l'unité de commande externe (18).

2. Installation selon la revendication 1, caractérisée en ce que

le premier signal d'état (44) est formé par la combinaison logique ET $I_{aus} \wedge \overline{S_{min}}$,
et en ce que le deuxième signal d'état (45) est formé par la combinaison logique ET $I_{aus} \wedge \overline{S_{max}}$.

3. Installation selon la revendication 1, caractérisée en ce que
le dispositif (25) qui sert à influencer le processus de charge est un régulateur de l'intensité de la charge, qui branche ou débranche le courant de charge.

**4.** Installation selon la revendication 1, caractérisée en ce que le premier signal (41) est un signal inversant $I_{aus}$ servant au déroulement du courant de charge.

**5.** Installation selon la revendication 1, caractérisée en ce que les signaux de référence (43, 44) sont respectivement caractérisés par des rapports impulsions/pauses différents.

**6.** Installation selon la revendication 5, caractérisée en ce que pour définir les rapports impulsions/pauses on insère des flip-flops (bascules bis-stables).

**7.** Installation selon la revendication 1, caractérisée en ce que pour effectuer le couplage on prévoit sur l'unité de commande externe (18) une installation d'adaptation des signaux (30).

**8.** Installation selon la revendication 1, caractérisée en ce que l'on prévoit comme installation d'adaptation des signaux (30) une coupure galvanique de préférence une transmission du moyen d'un coupleur optoélectronique.

**9.** Installation selon la revendication 1, caractérisée en ce que l'une au moins des unités de mémoire (23) est une mémoire qui peut être surimprimée.

**10.** Installation selon la revendication 9, caractérisée en ce que l'on dépose dans l'unité de mémoire (23) les états de charge réels.

**11.** Installation selon la revendication 1, caractérisée en ce que le dispositif qui sert à détecter l'état de charge réel (33) est un dispositif de détection en temps réel, qui fait la somme au moyen d'un premier détecteur d'intensité (36), disposé entre l'accumulateur (14) et le mécanisme électrique d'embarquement (37) et au moyen d'un second détecteur d'intensité (26) disposé entre l'accumulateur (14) et les contacts de charge (21) de l'intensité de charge donnée en fonction du temps et forme à partir de là, l'état réel.

**12.** Installation selon la revendication 11, caractérisée en ce que le premier et le second détecteur (36) et (26) sont respectivement des capteurs d'intensité.

**13.** Procédé pour charger un accumulateur (14) d'un dispositif de transport avec son propre mode d'entraînement électrique en particulier pour des véhicules de transport de pièces à usiner dans le cas de voies de transfert avec lesquelles le dispositif de transport (11), commande par une unité de commande externe (18) se déplace d'un poste à l'autre et l'accumulateur (14) est chargé au moyen d'un couplage de puissance (21, 22) par un poste de charge externe (16), une comparaison de l'état de charge réel avec une charge minimale $Q_{min}$ et avec une charge maximale $Q_{max}$ en tant que valeurs de référence étant réalisée par un processeur (24) dans le dispositif de transport (11) et à partir de ces résultats le processeur (24) agissant sur le processus de charge d'une façon telle que l'accumulateur (14) reçoit au moins une charge correspondant à l'une des valeurs de référence, en particulier la charge minimale $Q_{min}$ nécessaire pour atteindre le poste de charge le plus proche ou au plus la charge maximale $Q_{max}$ prédéfinie, procédé caractérisé en ce que

l'on détecte l'action produite sur le processus de charge via le couplage de puissance (21, 22), en ce que l'on forme pour la charge minimale $Q_{min}$ et la charge maximale $Q_{max}$ au poste de charge (16) respectivement un signal d'état correspondant (44, 45) en ce que l'on amène les signaux d'état (44, 45) à l'unité de commande externe (18) en ce que l'unité de commande (18) exploite l'état de charge de l'accumulateur (14) transmis au moyen du signal d'état (44, 45) et un signal de départ (40) représentant l'état du retraitement et en ce qu' en fonction de la fin du retraitement et au plus tôt quand l'état de charge minimale a été atteint on libère le dispositif de transport (11).

**14.** Procédé selon la revendication 13, caractérisé en ce que pour influencer le couplage de puissance on utilise le courant qui s'écoule par le raccordement de puissance, en limitant ou en débranchant ce courant.

**15.** Procédé selon la revendication 13, caractérisé en ce que

l'état de charge réel est détecté au moyen d'un bilan énergétique qui fait la somme du courant prélevé au cours du temps et en ce que l'on détermine ensuite le temps de charge à l'aide de la formule suivante :

$$T_1 = \frac{I_c \cdot E}{I_1 \cdot \eta}$$

dans laquelle :

$T_1$ est le temps e charge

$I_c$ est le courant consommé

$I_1$ est le courant de charge

E est le temps de décharge et,

$\eta$ est le rendement de l'accumulateur utilisé.

16. Procédé selon la revendication 13, caractérisé en ce que

à chaque fois que l'on influence le couplage de puissance on déclenche un signal, qui s'écoule en s'inversant par rapport au courant de charge,

en ce que

lors de chaque déclenchement du premier signal (41) on branche pour chaque valeur de référence respectivement un signal de référence et en ce qu'

en combinant le premier signal (41) avec respectivement un signal de référence on forme les signaux d'état correspondant aux signaux respectifs de référence.

17. Installation selon la revendication 13, caractérisée en ce que
à la charge minimale $Q_{min}$ et/ou à la charge maximale $Q_{max}$ sont associés les signaux de référence $S_{min}$ (43) et $S_{max}$ (44).

18. Procédé selon la revendication 13, caractérisé en ce que
pour former les signaux d'état on utilise une combinaison logique ET du premier signal (41) avec les signaux de référence rendus négatifs $S_{min}$ (43) et $S_{max}$ (44).

19. Procédé selon la revendication 18, caractérisé en ce que
les signaux de référence $S_{min}$ (43) et/ou $S_{max}$ (44) sont respectivement caractérisés par des rapports différents impulsions/pauses.

# FIG.1

# FIG. 2

# FIG. 3

EP 0 482 138 B1

FIG. 4

14